# EUROPEAN PATENT SPECIFICATION

(11) **EP 4 366 866 B1**
(45) Date of publication and mention of the grant of the patent: **05.08.2026**
(21) Application number: 22838156.2
(22) Date of filing: 09.06.2022
(51) Int. Cl.: B01J 20/12, B01J 20/32, B01J 23/70, B01J 37/04, B01J 23/745, B01J 21/16, C02F 1/32, C02F 1/72, B01J 35/23, B01J 35/39

(54) **SEMICONDUCTOR HETEROGENEOUS CATALYST WITH PHOTOCATALYTIC EFFECT UNDER VISIBLE LIGHT**
HETEROGENER HALBLEITERKATALYSATOR MIT PHOTOKATALYTISCHEM EFFEKT UNTER SICHTBAREM LICHT
CATALYSEUR HÉTÉROGÈNE SEMI-CONDUCTEUR À EFFET PHOTOCATALYTIQUE SOUS LUMIÈRE VISIBLE

(30) Priority: 08.07.2021 TR 202111163
(43) Date of publication of application: 15.05.2024
(73) Proprietor: Gebze Teknik Üniversitesi, 41400 Gebze/Kocaeli (TR)
(72) Inventor: YATMAZ, Huseyin Cengiz, Gebze/Kocaeli (TR); IMER, Derya Yuksel, Sariyer/Istanbul (TR); BASARAN DINDAS, Gizem, Gebze/Kocaeli (TR)
(74) Representative: Berkkam, Ayfer
(86) International application number: PCT/TR2022/050569
(87) International publication number: WO 2023/282874

(56) References cited:
- CN-A- 110 898 851
- US-A1- 2016 051 975
- US-A1- 2020 123 025
- SZCZEPANIK BEATA ET AL: "Synthesis, characterization and photocatalytic activity of TiO 2 -halloysite and Fe 2 O 3 -halloysite nanocomposites for photodegradation of chloroanilines in water", APPLIED CLAY SCIENCE, vol. 149, 1 December 2017 (2017-12-01), AMSTERDAM, NL, pages 118 - 126, XP093264518, ISSN: 0169-1317, DOI: 10.1016/j.clay.2017.08.016
- BASARAN DINDAS GIZEM ET AL: "A novel Fe/HNT visible light-driven heterogeneous photocatalyst: Development as a semiconductor and photocatalytic application", PROGRESS IN NATURAL SCIENCE: MATERIALS INTERNATIONAL, ELSEVIER, AMSTERDAM, NL, vol. 32, no. 3, 20 March 2022 (2022-03-20), pages 273 - 281, XP087105076, ISSN: 1002-0071, [retrieved on 20220320], DOI: 10.1016/J.PNSC.2022.03.003
- RIAHI-MADVAAR RAMIN; TAHER MOHAMMAD ALI; FAZELIRAD HAMID: "Synthesis and characterization of magnetic halloysite-iron oxide nanocomposite and its application for naphthol green B removal", APPLIED CLAY SCIENCE, vol. 137, 16 December 2016 (2016-12-16), AMSTERDAM, NL , pages 101 - 106, XP029879491, ISSN: 0169-1317, DOI: 10.1016/j.clay.2016.12.019

## Description

### Technical Field

The present invention relates to a semiconductor nanocomposite heterogeneous catalyst from the iron(III) hydroxide sludge, which is a waste of the electro-Fenton process, which also exhibits photocatalytic effects at visible wavelengths and the production method thereof.

### Prior Art

Some heterogeneous catalysts consisting of halloysite nanotube (HNT) for wastewater treatment and metal oxide complexes are known in the art. Examples of said metal oxides include iron(III) oxide, titanium dioxide, and zinc oxide. These catalysts have catalytic effects under ultraviolet radiation and provide the decomposition of pollutants. For the production of these catalysts, the HNT mineral is doped with the relevant metal oxide.

Fenton processes can also be used for the treatment of wastewater. Fenton processes are based on the formation of hydroxyl and hydroperoxyl radicals from hydrogen peroxide during the formation of iron(III) by the first oxidation of iron and then the re-formation of iron(III) by a reduction in a solution containing a compound comprising hydrogen peroxide and iron(II). These radicals also cause the decomposition of wastes. In the Electro-Fenton process, hydrogen peroxide is produced at the electrodes and does not need to be added externally. On the other hand, the wastes precipitate as iron(III) hydroxide with the non-degradable wastes in the form of the flock during the process.

CN110194463A discloses halloysite-ferrite composites and the production thereof. For the production of these composites, halloysite dispersed in a solution containing iron(II) and iron(III) chloride was used.

CN103301827A discloses halloysite-based photocatalysts containing semiconductors including TiO₂, SnO₂, ZnO, CdS, ZnS, CdSe, CeO₂, and AgBr and the production thereof. Nanocomposite heterogeneous catalysts obtained by loading TiO₂ and Fe₃O₄ on the halloysite nanotube surface are disclosed in the document titled "Synthesis, adsorption and photocatalytic property of halloysite-TiO₂-Fe₃O₄ composites" (Pengwu Zheng, Yuanyuan Du, Dan Liu & Xiaofei Ma (2016) Synthesis, adsorption and photocatalytic property of halloysite-TiO2-Fe3O4 composites, Desalination and Water Treatment, 57:47, 22703-22710, 10.1080/19443994.2015.1137498). The efficiency of these catalysts under 365 nm ultraviolet light has been demonstrated. It has no activity under visible light.

Magnetic catalysts obtained by loading Fe₂O₃ on the halloysite nanotube surface are disclosed in the document titled "Halloysite nanotube-magnetic iron oxide nanoparticle hybrids for the rapid catalytic decomposition of pentachlorophenol" (T. Tsoufis, F. Katsaros, B.J. Kooi, E. Bletsa, S. Papageorgiou, Y. Deligiannakis, I. Panagiotopoulos. Halloysite nanotube-magnetic iron oxide nanoparticle hybrids for the rapid catalytic decomposition of pentachlorophenol. Chemical Engineering Journal 2017, 313, 466-474. 10.1016/j.cej.2016.12.056).

TiO₂-halloysite nanocomposites obtained by the hydrothermal method and Fe₂O₃-halloysite nanocomposites obtained by the sol-gel method are disclosed in the document titled "Synthesis, characterization and photocatalytic activity of TiO₂-halloysite and Fe₂O₃-halloysite nanocomposites for photodegradation of chloroanilines in water" (Beata Szczepanik, Pawel Rogala, Piotr M. Slomkiewicz, Dariusz Banaś, Aldona Kubala-Kukuś, Ilona Stabrawa, Synthesis, characterization and photocatalytic activity of TiO₂-halloysite and Fe₂O₃-halloysite nanocomposites for photodegradation of chloroanilines in water, Applied Clay Science, Volume 149, 2017, Pages 118-126, 10.1016/j.clay.2017.08.016.).

US10065182B2 describes nanocrystalline compounds containing metal ions, including iron(III) cations embedded in clay minerals. It has been mentioned that they have a photocatalytic effect in visible light and have semiconductor properties. It has been mentioned that iron(III) cations may be based on iron(III) sulfate. It has also been stated that the clay mineral may be montmorillonite. To obtain this catalyst, a method is also described, comprising adding salts of iron(III) such as nitrate, sulfate, and chloride to a suspension containing clay minerals, heating, washing the clay minerals with distilled water, and drying. The said method is applied in an alkaline aqueous medium with a pH higher than 8. CN108554408A discloses a catalyst containing Fe₃O₄ on clay (schwertmanitten (Fe₈O₈(OH)₆(SO₄)·nH₂O or Fe³⁺₁₆O₁₆(OH,SO₄)₁₂₋₁₃·10-12H₂O) and its production. The method includes the steps of preparing a mixture of Fe₃O₄ and diluted H₂SO₄ solution, adding FeSO₄·7H₂O and H₂O₂ to the mixture, washing the precipitate with dilute H₂SO₄ solution, and then pure water and drying.

CN102658141A discloses the production of a heterogeneous photocatalyst that has an effect in visible light. For this purpose, firstly, a solution containing hydroxyl-iron ions is prepared, then hydroxyl-iron sepiolite complexes are formed by adding a sepiolite (magnesium phyllosilicates, meerschaum) suspension. Hydroxyl-iron solution is obtained from iron(III) nitrate and sodium carbonate solution.

In the document titled "Speciation of the H₂SO₄-Fe₂(SO₄)₃-FeSO₄-H₂O system and development of an expression to predict the redox potential of the Fe³⁺/Fe²⁺ couple up to 150°C" (Guikuan Yue, Liming Zhao, Oscar G. Olvera, Edouard Asselin. S Speciation of the H2SO4-Fe2(SO4)3-FeSO4-H2O system and development of an expression to predict the redox potential of the Fe3+/Fe2+ couple up to 150 °C. Hydrometallurgy, Volumes 147-148, 2014, Pages 196-209. 10.1016/j.hydromet.2014.05.008.), iron(II) and iron(III) ions, their oxides, and sulfates in sulfuric acid solution were examined.

### The Objects and Summary of the Invention

The object of the present invention is to develop a nanocomposite heterogeneous catalyst that can have photocatalytic effects in a wide range, including visible wavelengths for use in the treatment of wastewater, and its production method.

Another object of the present invention is to develop a nanocomposite heterogeneous catalyst with semiconductor properties and its production method.

Another object of the present invention is to develop a method of producing nanocomposite heterogeneous catalyst that enables the utilization of the iron(III) hydroxide sludge, which is a waste of the electro-Fenton process.

A method has been developed with the invention comprising preparing an aqueous solution of the iron(III) hydroxide, adding 4N H₂SO₄ to this solution at a pH value of 3.5 to 4, adding HNT to this solution, and after the reaction in the final solution, forming HNT iron(III) cation complexes with effective photocatalytic and semiconductor properties under visible light. These HNT iron(III) cation complexes will result in new technical possibilities in different fields including wastewater treatment and electronics. The developed production method also allows the utilization of iron(III) hydroxide originating from the electro-Fenton process and does not require new metal compound inputs.

### Detailed Description of the Invention

The catalyst realized to achieve the objects of the present invention and its production method are described in the attached figures.

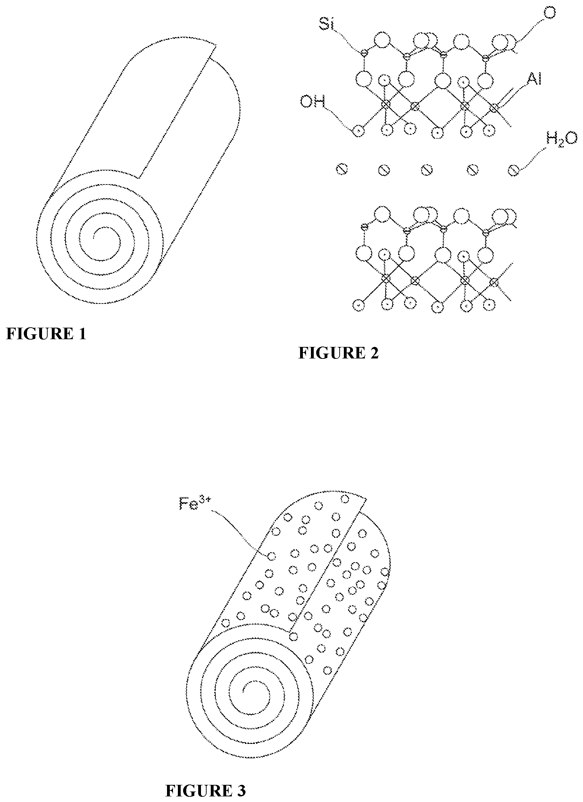

**Figure 1** It is the schematic view of an HNT particle used in an exemplary embodiment of the invention.
**Figure 2** It is the detail A shown in Figure-1.
**Figure 3** It is the schematic view of a catalyst with the HNT/Fe³⁺ composite obtained according to an exemplary embodiment of the invention.

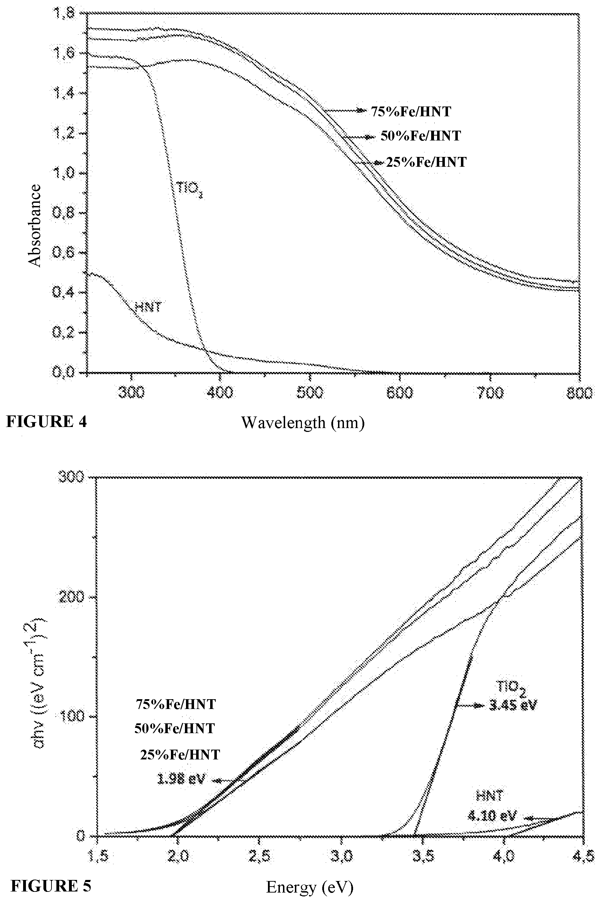

**Figure 4** It is the graph showing the UV-DRS analysis results of the first, second, and third samples, which are catalysts as in Figure-3. Curves obtained for TiO₂ and HNT are also given for comparison.
**Figure 5** It is the Tauc graph of the first, second, and third samples, which are catalysts as in Figure-3. Curves obtained for TiO₂ and HNT are also given for comparison.

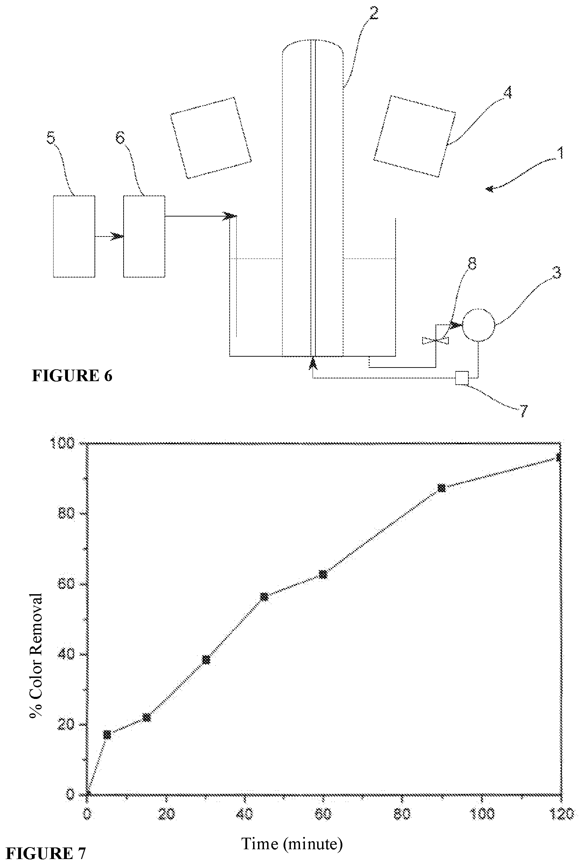

**Figure 6** It is the schematic view of a photocatalytic oxidation system in which a catalyst according to the invention can be used.
**Figure 7** The color removal-time graph corresponding to the photocatalytic oxidation of the RO16 dyestuff.

The parts in the figures are numbered individually and the equivalents of these numbers are given below.
**1.** Photocatalytic oxidation system
**2.** Fountain flow glass reactor
**3.** Peristaltic pump
**4.** Mirror
**5.** Air source
**6.** Cooling container
**7.** Flowmeter
**8.** Sampling valve

The catalyst production method of the invention comprises preparing an aqueous solution of the iron(III) hydroxide (Fe(OH)₃), adding 4N H₂SO₄ to the prepared solution at a pH value of 3.5 to 4, adding clay minerals of nanoscale kaolin group to the solution and keeping the solution with nanoscale clay minerals. While keeping the solution, iron(III) cations (Fe³⁺) accumulate on the clay minerals, forming a photocatalytic and semiconductor nanocomposite heterogeneous catalyst, also at visible wavelengths, consisting of clay/Fe³⁺ complexes. While keeping the solution, Fe(OH)₃ particles also accumulate in the clay pores as well as the formation of clay/Fe³⁺ complexes.

The said kaolin group nanoscale clay minerals with the empirical formula Al₂Si₂O₅(OH)₄-nH₂O and 1:1 structure preferably composed of nanoscale kaolinite with the empirical formula Al₂Si₂O₅(OH)₄, especially halloysite nanotubes (HNT) with the empirical formula Al₂Si₂O₅(OH)₄-nH₂O. Halloysite nanotubes have a high Fe³⁺ carrying capacity with the large surface area and spaces between the layers resulting from the spiral tube structure and form an effective catalyst by interacting with the reaction inputs in a wide area. In addition, HNTs can carry large amounts of Fe³⁺ since they have negative charges on their outer surfaces in acidic conditions. Thus, heterogeneous catalysts, preferably consisting of HNT/Fe³⁺ complexes, are obtained by the method of the invention.

Within the scope of the invention, Fe(OH)₃ aqueous solution is obtained by using Fe(OH)₃ sludge, which is the waste of the electro-Fenton process. Depending on the water content of the sludge, Fe(OH)₃ is present in the sludge as partially dissolved or suspended flocks, mostly in the form of flocks accumulated by flocculation. There may also be some pollutants on the accumulated flocks, which originate from the wastes that have not been fully degraded by the electro-Fenton process.

Before preparing the solution, the step of cleaning the pollutants on the Fe(OH)₃ flocks can also be applied. This step includes, for example, ultrasound application and washing processes. Then, the step of drying the flocks can also be applied.

While keeping the solution with a pH value of 3.5 to 4 and with nanoscale clay minerals, Fe(OH)₃-based Fe³⁺ cations are attached to the clay minerals and accumulate thereon.

While the solution is kept, processes such as mixing the solution and keeping it at a certain temperature can be applied to efficiently accumulate Fe³⁺ on the clay minerals. With the invention, although it is not necessary to monitor and regulate the pH value continuously after the pH value is adjusted, applications, where the pH value of the solution is kept constant at 3.5 to 4, can also be realized.

Clay/Fe³⁺ complexes obtained according to the invention can be used by being suspended in solution, or they can be stored in the form of a ready-to-use precipitate by being separated from the solution. By calcining the separated precipitates, the Fe³⁺ cations attached to the clay surface and the Fe(OH)₃ particles accumulated in the clay pores can be fixed.

In an exemplary embodiment of the invention, catalysts are produced by the steps of
- cleaning the sludge containing Fe(OH)₃ originating from the electro-Fenton process by ultrasound application and washing with distilled water,
- drying the cleaned sludge in the oven at the temperature of 100°C,
- preparing the first, second, and third Fe(OH)₃ precursor solutions containing 25%, 50%, and 75% iron by weight, respectively, and each of them is 30 mL,
- adding the prepared solutions dropwise to 170 mL distilled water at the temperature of 100°C and mixing the resulting solutions for 1 hour,
- waiting for each solution to reach room temperature,
- adding 4N H₂SO₄ to each solution at a pH of 3.5 to 4,
- adding HNT to each solution,
- mixing each solution at 60 to 70°C for 24 hours,
- taking each resulting precipitate by filtering,
- washing each precipitate with distilled water and drying at 100°C for 1 hour,
- calcining each precipitate at 180°C for 2 hours.

Some tests were also carried out to determine the properties of the resulting HNT/Fe³⁺ complexes. The results of the UV-DRS analysis performed with the first, second, and third samples obtained by using the first, second, and third precursor solutions, respectively, are shown in Figure-4. It is seen that the samples also exhibit activity at visible wavelengths. On the other hand, it is observed that TiO₂, which is widely used in photocatalytic applications, shows activity at ultraviolet wavelengths, while its activity is interrupted at visible wavelengths. Also, the Tauc graph for these samples is given in Figure-5. This graph also shows the semiconductor character of the samples and their activity in visible light.

To evaluate the photocatalytic activity of the resulting catalysts, experiments were carried out in a photocatalytic oxidation system (1) using Reactive Orange 16 (RO16) dyestuff. The photocatalytic oxidation system (1) includes a fountain flow glass reactor (2) in which the oxidation takes place, a peristaltic pump (3) that circulates the solution, mirrors (4) that collect sunlight for photocatalytic oxidation and direct to the fountain flow glass reactor (2), an air source (5) providing oxygen input to the fountain flow glass reactor (2), a cooling container (6) regulating the temperature of the air supplied from the air source (5), a flowmeter (7) controlling the peristaltic pump (3), and a sampling valve (8) that allows sampling from the outlet of the fountain flow glass reactor (2). For the synthetically prepared 100 mg/L RO16 dyestuff solution, the efficiency of the color removal of the solution corresponding to the oxidation occurring under visible light by using 1 g/L first sample catalyst and 10 mM H₂O₂ was observed and is shown in Figure-7.

The production of the catalyst in large quantities suitable for batch or continuous production can also be carried out according to the invention. It may also be possible to carry out the steps of preparing the Fe(OH)₃ solution and adjusting the pH of the solution together. On the other hand, to control the accumulation of Fe(OH)₃ on nanoscale clay minerals, the addition of clay minerals is started only after the pH value of the solution is adjusted.

Although the invention has been described with a Fe(OH)₃ aqueous solution, embodiments using a Fe(OH)₃ aqueous dispersion containing dissolved and suspended (colloidal) Fe(OH)₃ can also be realized. Fe(OH)₃ can also be obtained from other iron-containing waste sludge instead of the wastes of the electro-Fenton process.

## Claims

1. A catalyst production method, comprising the steps of adding nanoscale clay minerals to a solution containing Fe³⁺ cations and keeping the solution with nanoscale clay minerals for producing nanocomposite heterogeneous catalysts in the form of a clay/Fe³⁺ complex; **characterized by** preparing Fe(OH)₃ aqueous solution as a solution containing Fe³⁺ cations, adding 4N H₂SO₄ to the prepared solution with a pH value of 3.5 to 4, and adding nanoscale kaolin group clay minerals to the solution as nanoscale clay minerals.

2. A catalyst production method according to claim 1, **characterized in that** the Fe(OH)₃ aqueous solution is obtained by using Fe(OH)₃ sludge, which is a waste of the electro-Fenton process.

3. A catalyst production method according to claim 2, **characterized by** the step of cleaning the pollutants on the Fe(OH)₃ flocks, which is applied before the preparation of the solution.

4. A catalyst production method according to claim 1, **characterized in that** the solution is mixed at a temperature of 60 to 70°C while keeping the solution.

5. A catalyst production method according to claim 1, **characterized in that** the steps of preparing the Fe(OH)₃ solution and adjusting the pH of the solution are carried out together.

6. A catalyst production method according to claim 1, **characterized in that** the nanoscale clay minerals are halloysite nanotubes.

7. A catalyst production method according to claim 1, **characterized in that** the nanoscale clay minerals are nanoscale kaolinite.

8. A semiconductor nanocomposite heterogeneous catalyst with photocatalytic effect at visible wavelengths, which is produced by the steps of preparing Fe(OH)₃ aqueous solution, adding 4N H₂SO₄ to the prepared solution with a pH value of 3.5 to 4, adding nanoscale kaolin group clay minerals and keeping the solution with nanoscale clay minerals, and consists of clay/Fe³⁺ complexes formed by iron (III) cations (Fe³⁺) accumulated on the clay mineral and Fe(OH)₃ particles accumulated in the pores on the clay surface.

9. A heterogeneous catalyst according to claim 8, comprising HNT/Fe³⁺ complexes.

10. Use of a heterogeneous catalyst according to claim 8 in photocatalytic oxidation applications.

11. Use of a heterogeneous catalyst according to claim 8 in electronics applications.

## Patentansprüche

1. Verfahren zur Herstellung eines Katalysators, umfassend die Schritte des Hinzufügens von nanoskaligen Tonmineralien zu einer Lösung, die Fe³⁺-Kationen enthält, und des Aufbewahrens der Lösung mit den nanoskaligen Tonmineralien zur Herstellung von heterogenen Nanokomposit-Katalysatoren in Form eines Ton/Fe³⁺-Komplexes; **gekennzeichnet durch** die Herstellung einer wässrigen Fe(OH)₃-Lösung als Lösung, die Fe³⁺-Kationen enthält, die Zugabe von 4N H₂SO₄ zu der hergestellten Lösung mit einem pH-Wert von 3.5 bis 4 und die Zugabe von nanoskaligen Tonmineralien der Kaolin-Gruppe zu der Lösung als nanoskalige Tonmineralien.

2. Verfahren zur Herstellung eines Katalysators gemäß Patentanspruch 1, **dadurch gekennzeichnet, dass** die wässrige Fe(OH)₃-Lösung unter Verwendung von Fe(OH)₃-Schlamm gewonnen wird, bei dem es sich um ein Abfallprodukt des Elektro-Fenton-Verfahrens handelt.

3. Verfahren zur Herstellung eines Katalysators gemäß Patentanspruch 2, **gekennzeichnet durch** den Schritt der Entfernung der Verunreinigungen von den Fe(OH)₃-Flocken, der vor der Herstellung der Lösung durchgeführt wird.

4. Verfahren zur Herstellung eines Katalysators gemäß Patentanspruch 1, **dadurch gekennzeichnet, dass** die Lösung bei einer Temperatur von 60 bis 70 °C gemischt wird, während die Lösung aufrechterhalten wird.

5. Verfahren zur Herstellung eines Katalysators gemäß Patentanspruch 1, **dadurch gekennzeichnet, dass** die Schritte der Herstellung der Fe(OH)₃-Lösung und der Einstellung des pH-Werts der Lösung gemeinsam durchgeführt werden.

6. Verfahren zur Herstellung eines Katalysators gemäß Patentanspruch 1, **dadurch gekennzeichnet, dass** es sich bei den nanoskaligen Tonmineralien um Halloysit-Nanoröhren handelt.

7. Verfahren zur Herstellung eines Katalysators gemäß Patentanspruch 1, **dadurch gekennzeichnet, dass** es sich bei den nanoskaligen Tonmineralien um nanoskaligen Kaolinit handelt.

8. Ein heterogener Halbleiter-Nanokomposit-Katalysator mit photokatalytischer Wirkung im sichtbaren Wellenlängenbereich, der durch folgende Schritte hergestellt wird: Herstellung einer wässrigen Fe(OH)₃-Lösung, Zugabe von 4N H₂SO₄ zu der hergestellten Lösung mit einem pH-Wert von 3.5 bis 4, Zugabe von nanoskaligen Tonmineralien der Kaolin-Gruppe und Aufbewahrung der Lösung mit den nanoskaligen Tonmineralien; er besteht aus Ton/Fe³⁺-Komplexen, die durch Eisen(III)-Kationen (Fe³⁺), die sich auf dem Tonmineral angesammelt haben, und Fe(OH)₃-Partikeln, die sich in den Poren auf der Tonoberfläche angesammelt haben.

9. Heterogener Katalysator gemäß Patentanspruch 8, der HNT/Fe³⁺-Komplexe enthält.

10. Verwendung eines heterogenen Katalysators gemäß Patentanspruch 8 bei photokatalytischen Oxidationsanwendungen.

11. Verwendung eines heterogenen Katalysators gemäß Patentanspruch 8 in elektronischen Anwendungen.

## Revendications

1. Procédé de production d'un catalyseur, comprenant les étapes consistant à ajouter des minéraux argileux à l'échelle nanométrique à une solution contenant des cations Fe³⁺ et à maintenir la solution avec les minéraux argileux à l'échelle nanométrique afin de produire des catalyseurs hétérogènes nanocomposites sous la forme d'un complexe argile/Fe³⁺ ; **caractérisée par** la préparation d'une solution aqueuse de Fe(OH)₃ en tant que solution contenant des cations Fe³⁺, l'ajout de H₂SO₄ 4N à la solution préparée ayant un pH compris entre 3.5 et 4, et l'ajout de minéraux argileux du groupe du kaolin à l'échelle nanométrique à la solution en tant que minéraux argileux à l'échelle nanométrique.

2. Procédé de production d'un catalyseur selon la revendication 1, **caractérisé en ce que** la solution aqueuse de Fe(OH)₃ est obtenue à partir de boues de Fe(OH)₃, qui constituent un déchet du procédé électro-Fenton.

3. Procédé de fabrication d'un catalyseur selon la revendication 2, **caractérisé par** l'étape consistant à éliminer les polluants présents sur les agrégats de Fe(OH)₃, laquelle est effectuée avant la préparation de la solution.

4. Procédé de fabrication d'un catalyseur selon la revendication 1, **caractérisé en ce que** le mélange de la solution s'effectue à une température comprise entre 60 et 70 °C tout en maintenant la solution.

5. Procédé de fabrication d'un catalyseur selon la revendication 1, **caractérisé en ce que** les étapes consistant à préparer la solution de Fe(OH)₃ et à ajuster le pH de cette solution sont réalisées simultanément.

6. Procédé de fabrication d'un catalyseur selon la revendication 1, **caractérisé en ce que** les minéraux argileux à l'échelle nanométrique sont des nanotubes d'halloysite.

7. Procédé de fabrication d'un catalyseur selon la revendication 1, **caractérisé en ce que** les minéraux argileux à l'échelle nanométrique sont de la kaolinite à l'échelle nanométrique.

8. Catalyseur hétérogène à base de nanocomposites semi-conducteurs présentant un effet photocatalytique dans le spectre visible, obtenu par les étapes suivantes : préparation d'une solution aqueuse de Fe(OH)₃, ajout de H₂SO₄ 4N à la solution préparée dont le pH est compris entre 3,5 et 4, ajout de minéraux argileux du groupe du kaolin à l'échelle nanométrique et maintien de la solution contenant ces minéraux argileux à l'échelle nanométrique ; ce catalyseur est constitué de complexes argile/Fe3+ formés par des cations fer (III) (Fe³⁺) accumulés sur le minéral argileux et de particules de Fe(OH)₃ accumulées dans les pores à la surface de l'argile.

9. Catalyseur hétérogène selon la revendication 8, comprenant des complexes HNT/Fe³⁺_

10. Utilisation d'un catalyseur hétérogène selon la revendication 8 dans des applications d'oxydation photocatalytique.

11. Utilisation d'un catalyseur hétérogène selon la revendication 8 dans des applications électroniques.
